# EUROPÄISCHE PATENTANMELDUNG

(11) **EP 2 799 179 A1**
(43) Veröffentlichungstag der Anmeldung: **05.11.2014**
(21) Anmeldenummer: 13165763.7
(22) Anmeldetag: 29.04.2013
(51) Int. Cl.: B23K 26/34, B23K 26/14, B22F 3/105, B23P 6/00

(54) **Generatives Verfahren zum Erzeugen eines Endgefüges sowie ein Endgefüge**

(71) Anmelder: Siemens Aktiengesellschaft, 80333 München (DE)
(72) Erfinder: Burbaum, Bernd, Dr., 14612 Falkensee (DE)

(57) **Zusammenfassung**

Die Erfindung betrifft ein generatives Verfahren zum Erzeugen eines Endgefüges mit den folgenden Schritten:
- Auftragen einer ersten Schicht (1a) eines ersten Pulvergemisches (AB1), und Verfestigen dieser ersten Schicht (1a) mittels Laserstrahlauftragsschweißen zu einem ersten Gefüge (1) mit einem ersten Gehalt (G1) an intermetallischer Phase, wobei das erste Pulvergemisch (AB1) zumindest einen ersten Teil eines erstes Pulvers (A) und zumindest einen zweiten Teil eines zweiten Pulvers (B) umfasst,
- wobei der erste Teil (10a) des ersten Pulvers (A) und der zweite Teil (10b) des zweiten Pulvers (B) des ersten Pulvergemisches (AB1) abhängig vom Gehalt (G1) an intermetallischer Phase des ersten Gefüges (1) so gewählt wird, dass sich eine maximale Korngröße (h1) einstellt, bei der sich das erste Gefüge (1) durch eine gute Kriecheigenschaft und verminderter Rissbildung auszeichnet,
- Auftragen von zumindest einer zweiten Schicht (2a) eines zweiten Pulvergemisches (AB2), auf dem ersten Gefüge (1) und Verfestigen dieser zweiten Schicht (2a) mittels Laserstrahlauftragsschweißen zu einem zweiten Gefüge (2) mit einem zweiten Gehalt (G2) an intermetallischer Phase und mit einer zweiten Korngröße (h2), wobei das zweite Pulvergemisch (AB2) zumindest einen ersten Teil (20a) des ersten Pulvers (A) und einen zweiten Teil (20b) des zweiten Pulvers umfasst,
- wobei bei kleinerem zweiten Gehalt (G2) an intermetallischer Phase des zweiten Gefüges (2) im Vergleich zu dem ersten Gehalt (G1) an intermetallischer Phase des ersten Gefüges (1) der erste Teil (20a) des ersten Pulvers (A) und der zweite Teil (20b) des zweiten Pulvers (B) des zweiten Pulvergemisches (AB2) so gewählt werden, dass die zweite Korngröße (h2) des zweiten Gefüges (2) größer ist als die erste Korngröße (h1) des ersten Gefüges (1),
- und wobei bei größerem zweiten Gehalt (G2) an intermetallischer Phase des zweiten Gefüges (2) im Vergleich zu dem ersten Gehalt (G1) an intermetallischer Phase des ersten Gefüges (1) der erste Teil (20a) des ersten Pulvers (A) und der zweite Teil (20b) des zweiten Pulvers (B) des zweiten Pulvergemisches (AB2) so gewählt werden, dass die zweite Korngröße (h2) des zweiten Gefüges kleiner ist als die erste Korngröße (h1) des ersten Gefüges (1).

Weiterhin betrifft die Erfindung ein solches Endgefüge (50).

## Beschreibung

Die Erfindung betrifft ein generatives Verfahren zum Erzeugen eines Endgefüges sowie ein Endgefüge.

Bei dem Laserpulverauftragsschweißen wird ein feines zum Teil aufgeschmolzenes, metallisches Pulver auf eine Stelle eines Werkstücks aufgebracht und mit dem Werkstück (Basissubstrat) verschmolzen. Hierzu wird üblicherweise kontinuierlich eine bestimmte Menge Pulver aufgebracht und aufgeschmolzen, wobei die Pulverzuführung und der Laser relativ zu dem Werkstück bewegt werden. Auf diese Weise kann dem Werkstück Material hinzugefügt werden, so dass es ergänzt oder repariert werden kann. Für eine Reparatur kann beispielsweise eine beschädigte Stelle des Werkstücks ausgefräst und anschließend im Zuge des Laserpulverauftragsschweißens die ausgebohrte Stelle aufgefüllt werden. Ein Aufbauen eines Werkstücks kann auf diese Weise erfolgen. Von besonderer Bedeutung sind solche Verfahren insbesondere dort, wo mit grobkörnigen bzw. monokristallinen Werkstücken gearbeitet wird, wie zum Beispiel bei der Fertigung oder der Reparatur von Gasturbinen bzw. Gasturbinenkomponenten.

Bei derartigen Verfahren haben die Auswahl geeigneter Parameter für die Menge des zuzuführenden Pulvers, der Laserleistung, des Laserdurchmessers und die Relativgeschwindigkeit, mit der die Pulverzuführung und der Laser über das Werkstück geführt werden, einen großen Einfluss auf die Eigenschaften des Prozesses. Für gute und vor allem reproduzierbare Ergebnisse ist eine genaue Einstellung und Einhaltung der gewählten Parameter von großer Wichtigkeit. Daher ist es unter anderem erstrebenswert, die innerhalb einer bestimmten Zeitspanne zugeführte Menge des Pulvers möglichst konstant halten zu können, so dass gleichbleibende Eigenschaften beim Aufschmelzen durch den Laser garantiert werden können. Mit dem Verfahren ist es möglich die kristalline Struktur des Substrates aufzunehmen, d.h. ein epitaktisches Wachstum der Körner zu forcieren. Um aber Risse zu vermeiden, müssen die Laserparameter so gewählt werden, dass die Epitaxie innerhalb der aufgebrachten Schicht zusammenbricht, so dass ein feinkörniges rissfreies Gefüge entsteht.

Das sogenannte Mikropulverauftragsschweißen (Micro-Laser-Cladding) ist eine Modifikation des klassischen Laserstrahlauftragsschweißens zum Generieren von Mikrostrukturen.

Auch bei dem Mikropulverauftragsschweißen werden Schichten mit Hilfe eines Lasers aufgebaut, bei denen der untere Teil der Schicht epitaktisch am Grundwerkstoff anwächst und oben im oberen Teil der Schicht polykristallin mit einer anderen Kristallorientierung erstarrt. Beim Schweißen der nächsten Schicht wird nur der obere Teil der darunter liegenden Schicht angeschmolzen, so dass ein epitaktisches Wachstum lediglich im oberen Bereich startet. Die Folge ist, dass das Gefüge in einer Art Schachbrettmuster erstarrt. Der Vorteil dieses Verfahrens ist, dass schwer schweißbare Legierungen mit diesem Verfahren rissfrei geschweißt werden können. Dies gilt insbesondere für Werkstoffe mit einem hohem Gehalt an härtender γ'-Phase (gamma-strich-Phase). Es ist jedoch von Nachteil, dass aufgrund der kleinen Korngröße im geschweißten Bereich, die Kriechfestigkeit des Werkstoffs im Vergleich zum Grundwerkstoff geringer ist.

Bisherige Ansätze zur Kornvergrößerung beziehen sich auf die Wärmenachbehandlung nach dem Schweißen (das sogenannte Post Weld Heat Treatment) und erbrachten, teilweise aufgrund von beschränkter Wärmenachbehandlung/Temperaturlimits, bisher keine befriedigenden Resultate.

Es ist daher eine erste Aufgabe der Erfindung, ein Verfahren zum Erzeugen eines grobkörnigen Endgefüges anzugeben, welches das oben genannte Problem verhindert. Eine zweite Aufgabe ist die Angabe eines solchen grobkörnigen Endgefüges.

Erfindungsgemäß wird die erste Aufgabe mit der Angabe eines generativen Verfahrens zum Erzeugen eines Endgefüges mit den folgenden Schritten gelöst:
- Auftragen einer ersten Schicht eines ersten Pulvergemisches, und Verfestigen dieser ersten Schicht mittels Laserstrahlauftragsschweißen zu einem ersten Gefüge mit einem ersten Gehalt an intermetallischer Phase, wobei das erste Pulvergemisch zumindest einen ersten Teil eines erstes Pulvers und zumindest einen zweiten Teil eines zweiten Pulvers umfasst,
- wobei der erste Teil des ersten Pulvers und der zweite Teil des zweiten Pulvers des ersten Pulvergemisches abhängig vom ersten Gehalt an intermetallischer Phase des ersten Gefüges so gewählt wird, dass sich eine maximale Korngröße einstellt, bei der sich das erste Gefüge durch eine gute Kriecheigenschaft und verminderter Rissbildung auszeichnet,
- Auftragen von zumindest einer zweiten Schicht eines zweiten Pulvergemisches, auf dem ersten Gefüge und Verfestigen dieser zweiten Schicht mittels Laserstrahlauftragsschweißen zu einem zweiten Gefüge mit einem zweiten Gehalt an intermetallischer Phase und mit einer zweiten Korngröße, wobei das zweite Pulvergemisch zumindest einen ersten Teil des ersten Pulver und einen zweiten Teil des zweiten Pulvers umfasst,
- wobei bei kleinerem zweiten Gehalt an intermetallischer Phase des zweiten Gefüges im Vergleich zu dem ersten Gehalt an intermetallischer Phase des ersten Gefüges der erste Teil des ersten Pulvers und der zweite Teil des zweiten Pulvers des zweiten Pulvergemisches so gewählt werden, dass die zweite Korngröße des zweiten Gefüges größer ist als die erste Korngröße des ersten Gefüges,
- und wobei bei größerem zweiten Gehalt an intermetallischer Phase des zweiten Gefüges im Vergleich zu dem ersten Gehalt an intermetallischer Phase des ersten Gefüges der erste Teil des ersten Pulvers und der zweite Teil des zweiten Pulvers des zweiten Pulvergemisches so gewählt werden, dass die zweite Korngröße des zweiten Gefüges kleiner ist als die erste Korngröße des ersten Gefüges.

Erfindungsgemäß besteht nun das generativ aufgebaute Gefüge aus Schichten mit an den Gehalt an intermetallischer Phase angepasster Korngröße. Dies bedeutet, dass mit zunehmendem Gehalt an intermetallischer Phase in den einzelnen, aufeinander aufbauenden Schichten, die Korngröße in den einzelnen Schichten abnimmt. Nimmt der Gehalt an intermetallischer Phase hingegen in den einzelnen, aufeinander aufbauenden Schichten ab, so nimmt die Korngröße hingegen zu. Dabei bedeutet eine so maximierte Korngröße eine verbesserte zeit- und temperaturabhängige, plastische Verformung unter Last, das sogenannte Kriechen. Zugleich muss die maximale Korngröße jedoch so gewählt werden, dass Risse und Schweißverzug vermieden werden sowie Schweißeigenspannung vermieden oder zumindest im Gefüge verteilt werden. Insbesondere können diese Schweißeigenspannungen zu Rissen und damit einer reduzierten Lebensdauer führen. Je größer der Gehalt an intermetallischer Phase, desto kleiner müssen die Körner erzeugt werden, so dass sich die Schweißeigenspannung entlang der Korngrenzen verteilen und Risse vermieden werden. Für das Auftragsschweißen werden zumindest zwei Pulver, einmal ein erstes Pulver und ein zweites Pulver eingesetzt, die in einem beliebigen Verhältnis miteinander vermischt und einem Schmelzbad für das Auftragsschweißen zugeführt werden können. Selbstverständlich können auch noch andere Pulver hinzugefügt werden. Das bedeutet, dass durch Verwendung des Schweißprozesses in Kombination mit dem epitaktischen Wachsen unter Berücksichtigung des Gehaltes an intermetallischer Phase, insbesondere von härtender γ'-Phase, die Korngröße im Gefüge maximiert wird, so dass keine Heißrisse während des Schweißen oder während der abschließenden Wärmebehandlung entstehen. Durch die Maximierung der Korngröße abhängig vom Gehalt an intermetallischer Phase jedoch ergibt sich eine deutlich verbesserte Kriecheigenschaft. Dadurch wird das Prozessfenster deutlich verkleinert.

Durch das erfindungsgemäße Verfahren können Gefüge insbesondere Endgefüge mit definierter Korngröße und definiertem Gehalt an intermetallischer Phase, insbesondere γ'-Phase generiert werden. Durch das Verfahren können auftragsgeschweißte Gefüge hinsichtlich der Kriecheigenschaften deutlich verbessert werden. Selbstverständlich können auch mehr als zwei Gefügeschichten oder weniger vorhanden sein. Auch kann der Gehalt an intermetallischer Phase selbstverständlich mit zunehmenden Gefügeschichten abnehmen oder zunehmen oder anderweitig variieren.

Bevorzugt wird die intermetallische Phase als härtende γ'-Phase ausgebildet. Diese eignet sich besonders bei einem Gefüge, das bei heißgasführenden Werkstücken, besonders Schaufeln einer Turbine, eingesetzt wird.

In bevorzugter Ausgestaltung sind die Korngrößen durch zumindest einen Verfahrensparameter für das Laserstrahlauftragsschweißen einstellbar.

Somit wird zumindest ein Verfahrensparameter für das Laserstrahlauftragsschweißen so eingestellt, dass entweder das erste Gefüge bei größerem ersten Gehalt an intermetallischer Phase als der zweite Gehalt des zweiten Gefüges eine kleinere Korngröße im Vergleich zur Korngröße des zweiten Gefüges aufweist oder dass das erste Gefüge bei einem kleineren Gehalt an intermetallischer Phase als der zweite Gehalt des zweiten Gefüges eine größere Korngröße aufweist. Dabei können die Parameter beispielsweise die Laserleistung, der Vorschub, oder der Massenstrom des zumindest ersten bzw. des zumindest zweiten Pulvers sein. Die Verfahrensparameter für das Laserstrahlauftragsschweißen werden nun so eingestellt, dass die Korngröße maximal wird. Das bedeutet, dass durch Verwendung des Schweißprozesses in Kombination mit dem epitaktischen Wachsen unter Berücksichtigung des Gehaltes an intermetallischer Phase, insbesondere von härtender γ'-Phase, die Korngröße im Gefüge maximiert wird, so dass keine Heißrisse während des Schweißens oder während der abschließenden Wärmebehandlung entstehen.

Bevorzugt wird die erste Schicht durch mehrere erste Schichten gebildet, welche alle denselben ersten Teil des ersten Pulvers und denselben Teil des zweiten Pulver am ersten Pulvergemisch aufweisen, und welche dieselben Verfahrensparameter aufweisen.

Weiterhin wird bevorzugt die zweite Schicht durch mehrere zweite Schichten gebildet, welche alle denselben ersten Teil des ersten Pulvers und denselben Teil des zweiten Pulvers am zweiten Pulvergemisch aufweisen, und welche dieselben Verfahrensparameter aufweisen. Dies ist vorteilhaft, wenn das Endgefüge als heißgasführendes Bauteil eingesetzt werden soll, z.B. als Schaufel. Auch müssen so nicht immer die Verfahrensparameter eingestellt werden, und/oder die Pulverzuführung reguliert werden, wodurch die Fertigung vereinfacht wird. Selbstverständlich kann das so entstehende Endgefüge auch noch weitere Schichten aufweisen. Auch kann die Anzahl der Schichten untereinander variieren.

Erfindungsgemäß wird die zweite Aufgabe mit der Angabe eines Endgefüges nach einem generativen Verfahren nach einem der oben genannten Ansprüche gelöst, bei dem eine zweite Korngröße eines zweiten Gefüges kleiner ist im Vergleich zu einer ersten Korngröße eines ersten Gefüges, wenn das zweite Gefüge einen größeren zweiten Gehalt an intermetallischer Phase im Vergleich zu einem ersten Gehalt an intermetallischer Phase des ersten Gefüges aufweist, und bei dem eine zweite Korngröße eines zweiten Gefüges größer ist im Vergleich zu einer ersten Korngröße eines ersten Gefüges wenn das zweites Gefüge einen kleineren zweiten Gehalt an intermetallischer Phase im Vergleich zu einem ersten Gehalt an intermetallischer Phase des ersten Gefüges aufweist

Dies bedeutet, dass mit zunehmendem Gehalt an intermetallischer Phase in den einzelnen, aufeinander aufbauenden Schichten, die Korngröße in den einzelnen Schichten abnimmt. Nimmt der Gehalt an intermetallischer Phase hingegen in den einzelnen, aufeinander aufbauenden Schichten ab, so nimmt die Korngröße hingegen zu.

Bevorzugt ist die intermetallische Phase eine härtende γ'-Phase. Bevorzugt umfasst die erste Schicht mehrere erste Schichten, welche alle denselben ersten Teil des ersten Pulvers und denselben Teil des zweiten Pulvers am ersten Pulvergemisch aufweisen, und welche dieselben Verfahrensparameter aufweisen. In weiterer bevorzugter Ausgestaltung umfasst die zweite Schicht mehrere zweite Schichten, welche alle denselben ersten Teil des ersten Pulvers und denselben Teil des zweiten Pulver am zweiten Pulvergemisch aufweisen, und welche dieselben Verfahrensparameter aufweisen. Dadurch kann das Endgefüge vor allem als heißgasführendes Bauteil in einem Kraftwerk eingesetzt werden, insbesondere wenn das Endgefüge als Nickelbasis-Superlegierung ausgestaltet ist.

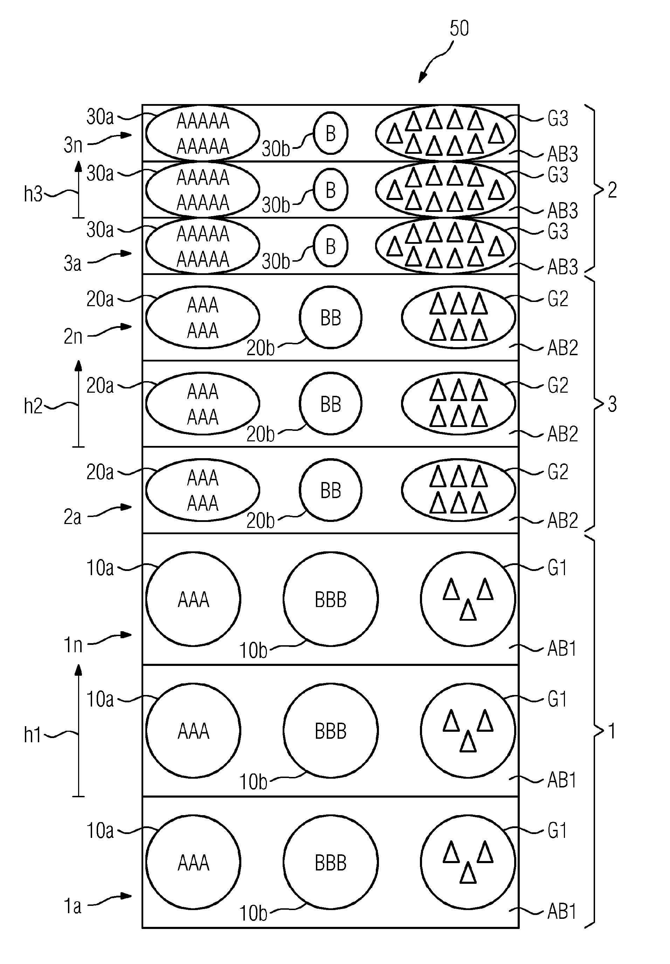

Weitere Merkmale, Eigenschaften und Vorteile der vorliegenden Erfindung ergeben sich aus der nachfolgenden Beschreibung unter Bezugnahme auf die beiliegende Figur. Darin zeigt schematisch:
FIG: ein erfindungsgemäßes, grobkörniges Endgefüge, welches mit dem erfindungsgemäßen Verfahren hergestellt wurde.

FIG zeigt ein erfindungsgemäßes, grobkörniges Endgefüge, welches mit dem erfindungsgemäßen Verfahren hergestellt wurde. Dabei kann das grobkörnige Endgefüge auch als Schweißgut bezeichnet werden. Dieses besteht aus einem ersten Gefüge 1, welches wiederum aus 1a-1n Schichten besteht. Dabei kann es sich auch um eine einzelne Schicht 1a handeln. Dabei wurden die Schichten 1a-1n laserstrahlauftragsgeschweißt. Dabei besteht das erste Gefüge 1 aus einem ersten Teil 10a eines ersten Pulvers A und eines zweiten Teils 10b eines zweiten Pulvers B. Das erste Gefüge 1 umfasst dabei einen ersten Gehalt G1 an intermetallischer Phase in den einzelnen Schichten 1a-1n. Dabei wird als intermetallische Phase nachfolgend die härtende γ'-Phase herangezogen. Dabei kann die härtende γ'-Phase dazugegeben werden (z.B. zum dem Pulver oder in dem Pulver vorhanden sein) oder sich erst bei Laserstrahlauftragsschweißen bzw. beim anschließenden Aushärten ausbilden. Angepasst an den (zu erwartenden) härtende Gehalt G1 an γ'-Phase werden nun der ersten Teil 10a des ersten Pulvers A und der zweite Teil 10b des zweiten Pulvers B gemischt, und zwar zu einem ersten Pulvergemisch AB1, so dass die Korngröße h1 in dem Gefüge 1 maximal wird, und zwar dergestalt, dass sich die Schweißeigenspannung entlang der Korngrenzen verteilen und Risse vermieden werden. Auch die Verfahrensparameter für das Laserstrahlauftragsschweißen werden so eingestellt, dass die Korngröße h1 maximal wird.

Dabei kann es sich um eine Korngröße h1 handeln, die bereits in den Pulvern vorhanden ist, oder die Korngröße h1 wird durch epitaktische Wachsen des ersten Pulvergemisches AB1 hervorgerufen. Das Pulvergemisch AB1 erstarrt dann nach dem Laserstrahlauftragsschweißen. Dabei kann das Pulvergemisch AB1 auch auf einer Basisstruktur laserauftragsgeschweißt werden, wo es anschließend zum Gefüge 1 mit einer ersten Korngröße h1 erstarrt. Dabei kann die erste Korngröße h1 nachfolgend auch als erste Kornhöhe bezeichnet werden. Ist der erste Gehalt G1 an härtender γ'-Phase wie in der Figur sehr klein, so ist die erste Korngröße h1 sehr groß.

Auf dieses Gefüge 1 werden nun weitere Schichten 2a-2n mittels Laserstrahlauftragsschweißen aufgebracht. Dabei kann es sich bei den Schichten 2a-2n auch nur um eine einzelne Schicht 2a handeln. Dabei fassen die einzelnen Schichten 2a-2n jeweils zumindest einen ersten Teil 20a an dem ersten Pulver A und einen zweiten Teil 20b an dem zweiten Pulver B. Zudem umfasst das entstehende zweite Gefüge 2 einen zweiten Gehalt G2 an härtender γ'-Phase in jeder der Schichten 2a-2n. Ist nun, wie in der FIG, der zweite Gehalt G2 an härtender γ'-Phase im zweiten Gefüge 2 größer als der erste Gehalt G1 an härtender γ'-Phase im ersten Gefüge 1, so werden der erste Teil des ersten Pulvers A und der zweite Teil des zweiten Pulvers B so zu einem zweiten Pulvergemisch AB2 gemischt, dass die zweite Korngröße h2 kleiner ist als die erste Korngröße h1 des Gefüges 1. Würde dagegen der zweite Gehalt G2 an härtender γ'-Phase des Gefüges 2 im Vergleich zum ersten Gehalt G1 an härtender γ'-Phase des Gefüges 1 abnehmen, so würden der zumindest erste Teil des ersten Pulvers A und der zweite Teil des zweiten Pulvers B derart zu einem zweiten Pulvergemisch AB2 gemischt, dass die Korngröße h2 größer wäre als die Korngröße h1. Dies bedeutet, dass je größer der Gehalt an γ'-Phase ist, desto kleiner müssen die Körner erzeugt werden, so dass sich die Schweißeigenspannung entlang der Korngrenzen verteilen und Risse vermieden werden. Das generativ aufgebaute Schweißgut besteht somit aus Schichten 1a-1n, 2a-2, 3a-3n mit an den Gehalt der γ'-Phase angepasster Korngröße. Somit werden der zumindest erste Teil an dem ersten Pulver A und der zumindest zweite Teil an dem zweiten Pulver B so gewählt und zu einem zweiten Pulvergemisch AB2 gemischt, dass die Korngröße h2 in dem Gefüge 2 maximal wird, und zwar so dass sich die Schweißeigenspannung entlang der Korngrenzen verteilen und Risse vermieden werden. Auch die Verfahrensparameter für das Laserstrahlauftragsschweißen werden so eingestellt, dass die Korngröße, angepasst an den Gehalt an härtender γ'-Phase maximal wird. Im vorliegenden Beispiel ist der zweite Gehalt G2 an γ'-Phase höher als der erste Gehalt G1 an γ'-Phase. Somit wird der erste Teil 20a des ersten Pulvers A und der zweite Teil 20b des zweiten Pulvers B so zu einem zweiten Pulvergemisch AB2 gemischt als auch die Verfahrensparameter für das Laserstrahlauftragsschweißen so eingestellt, dass die zweite Korngröße h2 des sich einstellenden zweiten Gefüges 2 kleiner als die erste Korngröße h1 des ersten Gefüges 1 ist. Dabei wird das Pulvergemisch AB2 vor oder beim dem Auftragsschweißen auf das erste Gefüge 1 aufgebracht und ausgehärtet.

Die FIG zeigt nun noch ein drittes Gefüge 3, welches aus den Schichten 3a-3n besteht. Dabei weist das dritte Gefüge 3 einen dritten Gehalt G3 an γ'-Phase auf, welcher größer als der zweite Gehalt G2 an γ'-Phase des zweiten Gefüges 2 ist. Somit wird ein erster Teil 30a des ersten Pulvers A und ein zweiter Teil 30b des zweiten Pulvers B so zu einem dritte Pulvergemisch AB3 gemischt als auch die Verfahrensparameter für das Laserstrahlauftragsschweißen so eingestellt, dass die dritte Korngröße h3 des sich einstellenden dritten Gefüges 2 kleiner als die erste Korngröße h1 des ersten Gefüges 1 und auch kleiner als die zweite Korngröße h2 des zweiten Gefüges 2 ist. Auch hier wird das dritte Pulvergemisch AB3 vor oder beim dem Auftragsschweißen auf das zweite Gefüge 2 aufgebracht und ausgehärtet.

Das Gefüge 1, das Gefüge 2 und das Gefüge 3 bilden nun ein Endgefüge 50, welches auch als Schweißgut bezeichnet werden kann. Das generativ aufgebaute Endgefüge 50 besteht somit aus Schichten 1a-1n, 2a-2n, 3a-3n mit an den Gehalt an γ'- Phase angepasster Korngröße h1, h2, h3 in jeder der Schichten 1a-1n, 2a-2n, 3a-3n. Je größer der Gehalt an γ'- Phase, desto kleiner müssen die Körner erzeugt werden, so dass sich die Schweißeigenspannung entlang der Korngrenzen verteilen und Risse vermieden werden. Für das Auftragsschweißen werden zumindest zwei Pulverwerkstoffe, nämlich das erste Pulver A und das Pulver B eingesetzt, die in einem beliebigen Verhältnis miteinander vermischt und dem Schmelzbad für das Auftragsschweißen zugeführt werden können. Selbstverständlich können auch noch andere Pulver/Materialien zugeführt werden. Die Verfahrensparameter für das Laserstrahlauftragsschweißen werden so eingestellt, dass die Korngröße h1, h2, h3 im jeweiligen Gefüge 1,2,3 maximal wird. Das bedeutet, dass durch Verwendung des Laserstrahlauftragsschweißens in Kombination mit dem epitaktischen Aufwachsen unter Berücksichtigung des Gehalts an γ'-Phase die Korngröße im Endgefüge 50 in jeder Schicht maximiert wird, so dass keine Heißrisse während des Schweißens oder während der abschließenden Wärmebehandlung entstehen.

Das Endgefüge 50 kann besonders als heißgasführendes Bauteil, wie z.B. Schaufeln eingesetzt werden.

Durch das erfindungsgemäße Verfahren lassen sich Endgefüge 50 herstellen, welche sich insbesondere durch die Vermeidung von Rissen während der Herstellung, als auch gute Kriecheigenschaften in Verbindung mit einem hohen Gehalt an γ'-Phase in jeder der vorhandenen Schichten auszeichnen. Selbstverständlich können auch mehr als drei Gefüge 1,2,3 oder weniger vorhanden sein. Auch kann der Gehalt an γ'-Phase selbstverständlich mit zunehmenden Gefüge abnehmen oder zunehmen oder anderweitig variieren. Auch kann können die Schichten 1a-1n, 2-2n, 3a-3n auch nur aus einer einzelnen Schicht 1a, 2a, 3a bestehen. Selbstverständlich können die Anzahl der Schichten vom Gefüge 1 bis zu einem n-ten Gefüge (nicht gezeigt) untereinander variieren. Auch kann der erste Teil des ersten Pulvers A oder zweite Teil des zweiten Pulvers B 100% oder 0% betragen.

## Patentansprüche

1. Generatives Verfahren zum Erzeugen eines grobkörnigen Endgefüges mit den folgenden Schritten:
- Auftragen einer ersten Schicht (1a) eines ersten Pulvergemisches (AB1), und Verfestigen dieser ersten Schicht (1a) mittels Laserstrahlauftragsschweißen zu einem ersten Gefüge (1) mit einem ersten Gehalt (G1) an intermetallischer Phase, wobei das erste Pulvergemisch (AB1) zumindest einen ersten Teil (10a) eines erstes Pulvers (A) und zumindest einen zweiten Teil (10b) eines zweiten Pulvers (B) umfasst,
- wobei der erste Teil (10a) des ersten Pulvers (A) und der zweite Teil (10b) des zweiten Pulvers (B) des ersten Pulvergemisches (AB1) abhängig vom ersten Gehalt (G1) an intermetallischer Phase des ersten Gefüges (1) so gewählt wird, dass sich eine maximale Korngröße (h1) einstellt, bei der sich das erste Gefüge (1) durch eine gute Kriecheigenschaft und verminderter Rissbildung auszeichnet,
- Auftragen von zumindest einer zweiten Schicht (2a) eines zweiten Pulvergemisches (AB2), auf dem ersten Gefüge (1) und Verfestigen dieser zweiten Schicht (2a) mittels Laserstrahlauftragsschweißen zu einem zweiten Gefüge (2) mit einem zweiten Gehalt (G2) an intermetallischer Phase und mit einer zweiten Korngröße (h2), wobei das zweite Pulvergemisch (AB2) zumindest einen ersten Teil (20a) des ersten Pulver (A) und einen zweiten Teil (20b) des zweiten Pulvers umfasst,
- wobei bei kleinerem zweiten Gehalt (G2) an intermetallischer Phase des zweiten Gefüges (2) im Vergleich zu dem ersten Gehalt (G1) an intermetallischer Phase des ersten Gefüges (1) der erste Teil (20a) des ersten Pulvers (A) und der zweite Teil (20b) des zweiten Pulvers (B) des zweiten Pulvergemisches (AB2) so gewählt werden, dass die zweite Korngröße (h2) des zweiten Gefüges (2) größer ist als die erste Korngröße (h1) des ersten Gefüges (1),
- und wobei bei größerem zweiten Gehalt (G2) an intermetallischer Phase des zweiten Gefüges (2) im Vergleich zu dem ersten Gehalt (G1) an intermetallischer Phase des ersten Gefüges (1) der erste Teil (20a) des ersten Pulvers (A) und der zweite Teil (20b) des zweiten Pulvers (B) des zweiten Pulvergemisches (AB2) so gewählt werden, dass die zweite Korngröße (h2) des zweiten Gefüges (2) kleiner ist als die erste Korngröße (h1) des ersten Gefüges (1).

2. Generatives Verfahren nach Anspruch 1,
**dadurch gekennzeichnet, dass** die intermetallische Phase als härtende γ'-Phase ausgebildet wird.

3. Generatives Verfahren nach Anspruch 1 oder 2,
**dadurch gekennzeichnet, dass** die Korngrößen (h1, h2, h3) durch zumindest einen Verfahrensparameter für das Laserstrahlauftragsschweißen einstellbar sind.

4. Generatives Verfahren nach Anspruch 3 ,
**dadurch gekennzeichnet, dass** die erste Schicht (1a) durch mehrere erste Schichten (1a-1n) gebildet wird, welche alle denselben ersten Teil (10a) des ersten Pulvers (A) und denselben Teil (10b) des zweiten Pulvers (B) am ersten Pulvergemisch (AB1) aufweisen, und welche dieselben Verfahrensparameter aufweisen.

5. Generatives Verfahren nach Anspruch 3 oder 4,
**dadurch gekennzeichnet, dass** die zweite Schicht (2a) durch mehrere zweite Schichten (2a-2n) gebildet wird, welche alle denselben ersten Teil (20a) des ersten Pulvers (A) und denselben Teil (20b) des zweiten Pulver (B) am zweiten Pulvergemisch (AB2) aufweisen, und welche dieselben Verfahrensparameter aufweisen.

6. Endgefüge (50) nach einem generativen Verfahren nach einem der Ansprüche 1-5 hergestellt, **dadurch geken nzeichnet, dass**
- eine zweite Korngröße (h2) eines zweiten Gefüges (2) kleiner ist im Vergleich zu einer ersten Korngröße (h1) eines ersten Gefüges (1), wenn das zweite Gefüge (2) einen größeren zweiten Gehalt (G2) an intermetallischer Phase im Vergleich zu einem ersten Gehalt (G1) an intermetallischer Phase des ersten Gefüges (1) aufweist,
- bei dem eine zweite Korngröße (h2) eines zweiten Gefüges (2) größer ist im Vergleich zu einer ersten Korngröße (h1) eines ersten Gefüges (1), wenn das zweites Gefüge (2) einen kleineren zweiten Gehalt (G2) an intermetallischer Phase im Vergleich zu einem ersten Gehalt (G1) an intermetallischer Phase des ersten Gefüges (1) aufweist.

7. Endgefüge (50) nach Anspruch 6,
**dadurch gekennzeichnet, dass** die intermetallische Phase eine härtende γ'-Phase ist.

8. Endgefüge (50) nach Anspruch 6 oder 7,
**dadurch gekennzeichnet, dass** die erste Schicht (1a) mehrere erste Schichten (1a-1n) umfasst, welche alle denselben ersten Teil (10a) des ersten Pulvers (A) und denselben Teil (10b) des zweiten Pulvers (B) am ersten Pulvergemisch (AB1) aufweisen, und welche dieselben Verfahrensparameter aufweisen.

9. Endgefüge (50) nach einem der vorhergehenden Ansprüche 6-8,
**dadurch gekennzeichnet, dass** die zweite Schicht (2a) mehrere zweite Schichten (2a-2n) umfasst, welche alle denselben ersten Teil (20a) des ersten Pulvers (A) und denselben Teil (20b) des zweiten Pulver (B) am zweiten Pulvergemisch (AB2) aufweisen, und welche dieselben Verfahrensparameter aufweisen.
